Europäisches Patentamt

European Patent Office

Office européen des brevets

(19)

(11) Publication number: **0 185 557 B1**

(12) **EUROPEAN PATENT SPECIFICATION**

(45) Date of publication of patent specification: **30.09.92** (51) Int. Cl.⁵: **G02F 1/01, G11B 7/125**

(21) Application number: **85309324.3**

(22) Date of filing: **20.12.85**

(54) Optical modulation systems.

(30) Priority: **21.12.84 JP 270488/84**

(43) Date of publication of application:
**25.06.86 Bulletin 86/26**

(45) Publication of the grant of the patent:
**30.09.92 Bulletin 92/40**

(84) Designated Contracting States:
**AT DE FR GB NL**

(56) References cited:
**EP-A- 0 162 617**
**WO-A-80/02467**
**US-A- 4 225 873**
**US-A- 4 253 734**
**US-A- 4 460 249**

(73) Proprietor: **SONY CORPORATION**
**7-35 Kitashinagawa 6-chome Shinagawa-ku Tokyo 141(JP)**

(72) Inventor: **Kuwabara, Shinichiro c/o Sony Corporation**
**Patents Division 6-7-35 Kitashinagawa Shinagawa-ku Tokyo 141(JP)**

(74) Representative: **Cotter, Ivan John et al**
**D. YOUNG & CO. 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to optical modulation systems. Systems embodying the invention may, for example, be used in an optical disc cutting apparatus for recording video information or audio information or data, either alone or in combination, on an optical video or audio disc or on an optical data disc on which data are stored.

A so-called optical system usually is used for recording a signal on a video disc or a digital audio disc. This system uses as a recording medium a disc of glass or the like having thereon a thin and uniform coating of a photoresist (photochemical reacting agent). A laser beam, modulated according to a recording signal (that is, a signal to be recorded) in an optical modulator, is applied to the photoresist as a spot having a very small diameter so as thereby to record the signal by sensitisation of the photoresist. Subsequently, the disc is developed.

In an optical disc cutting apparatus disclosed in US Patent No. US-A-4 225 873, a laser beam from a laser beam source is supplied to an optical modulator for modulation according to a recording signal, and the modulated light beam is supplied through a beam splitter or like optical system and then an objective lens or like lens system to be supplied as a spot having a very small diameter to the disc, which is rotated by a motor or the like, whereby the signal is recorded on the disc.

The optical modulator employed could be an electro-optical modulator disclosed in the Bell System Technical Journal, Vol. 50, No. 8, Oct. 1971, "Optical Modulation at High Information Rates" by G. White, in which the refractive index of a crystal is varied according to an electric field applied thereto. Another modulator is disclosed in Proceedings of the IEEE, Vol. 54, No. 10, Oct. 1966, "A Television Display Using Acoustic Deflector and Modulation of Coherent Light", by A. Korpel et al, which is a so-called acousto-optical modulator in which the refractive index of a medium is varied according to an acoustic sound wave. In these modulators, the light output has the characteristic of the square of a sine wave with respect to the voltage applied to the medium. The electro-optical modulator has a broader modulation bandwidth than the acousto-optical modulator, and optical disc cutting apparatus employing electro-optic modulators has previously been proposed.

When an information signal is recorded on a disc or the like in such an optical disc cutting apparatus, the exposure level, that is the output light intensity of the optical modulator, has to be controlled accurately to a prescribed level according to the information signal in conformity with the photosensitive characteristic of the photoresist or a metal film.

The characteristics of an electro-optical modulator are subject to variations due to the influence of heat generated in a crystal. In an optical disc cutting apparatus employing an electro-optical modulator, therefore, the intensity of the modulated laser beam is unstable with respect to a prescribed value. This drawback may be obviated by introducing a feedback control system as disclosed in US-A-4 225 873 (cited above).

However, we have found that if the characteristic of an electro-optical modulator is varied beyond a range over which control by the feedback control system is possible, the light output of the electro-optical modulator can no longer be stabilized.

The light intensity versus applied voltage characteristic of an electro-optical modulator varies according to the temperature. When the characteristic is varied greatly, the polarity of the applied voltage has to be switched between the case when the light output is changed in the positive direction and the case when it is changed in the negative direction.

According to the present invention there is provided an optical modulation system comprising:
an electro-optical modulator for modulating a laser beam according to a modulation signal;
photo-electric transducing means for transducing a modulated laser beam derived from the electro-optical modulator into an electrical signal; and
an oscillator for generating an oscillation signal;
characterized by:
a phase synchronising detector for detecting whether said electrical signal is in phase with or of opposite phase to said oscillation signal; and
a control circuit comprising an amplifier for providing two signals having positive and negative polarities, respectively, and a first switch, the amplifier being connected to be supplied with said oscillation signal and being operative to supply to said modulator a first modulation signal or a second modulation signal of opposite phase to the first modulation signal, and the first switch being controllable by the phase synchronising detector in such a manner that when said electrical signal is of opposite phase to said oscillation signal the first and second modulation signals are interchanged.

The invention will now be further described, by way of illustrative and non-limiting example, with reference to the accompanying drawings, in which:

Figure 1 is a graph showing a light intensity versus applied voltage characteristic of an electro-optical modulator used in an embodiment of the present invention; and

Figure 2 is a schematic representation of an optical disc cutting apparatus employing an optical modulation system embodying the present invention.

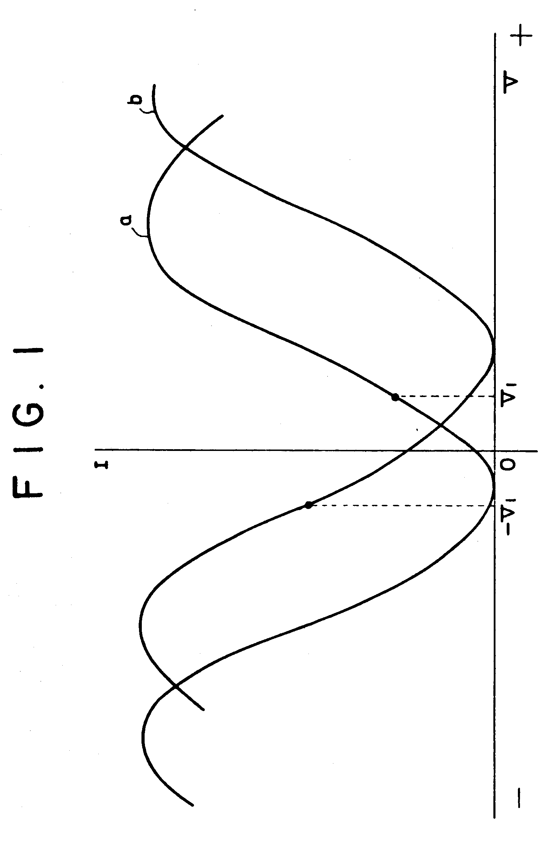

The light intensity versus applied voltage characteristic of an electro-optical modulator used in an embodiment of the present invention will now be described. Generally speaking, the electro-optical modulator has such a characteristic that it produces light having an intensity (I) proportional to the square of a sine wave with respect to an applied voltage (V). As shown in Figure 1, in a feedback control system where normal operation is performed with respect to an operating point corresponding to a value $V_1$ of the applied voltage V in a region of a characteristic curve a having a positive slope, the applied voltage V is reduced in the event of an increase of the light intensity I and is increased in the event of a reduction of the light intensity I. If the characteristic is changed to be as shown by a curve b, due to a temperature change or another cause, the characteristic curve b now has a negative slope at a point corresponding to the value $V_1$ of the applied voltage V. In this case, light intensity stabilisation control cannot be obtained if the applied voltage V is reduced in the event of an increase of the light intensity I as in the case of the characteristic curve a.

In such a case, the operating point is shifted to a value of the applied voltage V equal to $-V_1$ by inverting the polarity of the applied voltage V. If this is done, the light intensity I can be stabilised through the operation of reducing the applied voltage V in the event of an increase of the light intensity I and increasing the applied voltage V in the event of a reduction of the light intensity I.

An embodiment of the present invention described hereinbelow has been designed in accordance with the principle just explained and it seeks to facilitate handling of an electro-optical modulator thereof by permitting automatic switching of polarities.

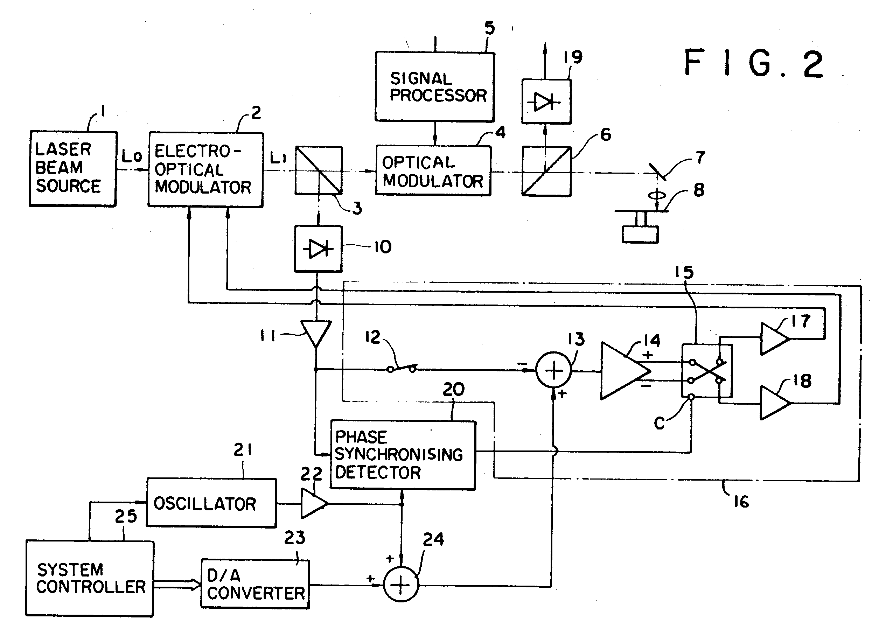

Figure 2 is a block diagram showing an optical disc cutting apparatus incorporating an optical modulation system embodying the present invention. In this apparatus, the optical modulation system is used for setting the light intensity of a laser beam.

Referring to Figure 2, a laser beam $L_0$ from a laser beam source 1 is modulated in an electro-optical modulator 2 according to a modulation signal provided from a control circuit 16 and the modulated signal is supplied to a beam splitter 3. After it has passed through the beam splitter 3, the laser beam is modulated in an optical modulator 4 according to a recording signal (that is, a signal to be recorded) provided from a signal processor 5. Information to be recorded is supplied through an optical system including a beam splitter 6, a mirror 7 and a lens 9 as a beam spot having a very small diameter on a recording medium 8, such as an optical disc as described above. Light reflected from the beam splitter 6 is transduced by a photo-electric transducing means 19 into an electrical signal, which is utilised for such purposes as, for example, monitoring of the recording signal.

Light reflected from the beam splitter 3 is received by a photo-electric transducing means 10 which transduces it into an electrical signal. A detection signal obtained from the photo-electric transducing means 10 is supplied through an amplifier 11 to the control circuit 16 and to a phase synchronising detector 20.

The control circuit 16 includes a switch 12, an adder 13, an amplifier 14 which provides two signals of positive and negative polarities, respectively, a switch 15 and amplifiers 17 and 18. Outputs of the amplifiers 17 and 18 are supplied to the electro-optical modulator 2. That is, the electro-optic modulator 2 is controlled according to a differential voltage between the outputs of the amplifiers 17 and 18. The differential output voltage has a polarity which can be inverted by control of the switch 15.

The phase synchronising detector 20 synchronously detects a detection signal supplied from the amplifier 11 using an oscillation signal supplied from an oscillator 21 through an amplifier 22, and supplies a polarity switching control signal to a control terminal C of the switch 15 in the control circuit 16 according to the result of synchronous detection.

The oscillation signal is supplied through an adder 24 to the adder 13 in the control circuit 16.

The oscillator 21 is controlled by a system controller 25. The system controller 25 provides a laser beam intensity setting value in the form of a digital signal to a digital-to-analog (D/A) converter 23. The D/A converter 23 converts its input into an analog signal which is supplied through the adder 24 to the adder 13 in the control circuit 16.

The operation of the system will now be described. When the switch 12 is opened, the system controller 25 operates the oscillator 21 and provides a value 0 to the D/A converter 23. At this time, the output of the adder 26 is the sole oscillation signal. The oscillation signal is supplied to the adder 13 in the control circuit 16 and amplified in the amplifier 14, which provides in-phase and opposite phase outputs which are supplied through the switch 15 and the amplifiers 17 and 18 to the electro-optical modulator 2. The output light (laser beam) $L_1$ of the electro-optical modulator 2, having been modulated by the oscillation signal, is divided by the beam splitter 3. Transmitted light is directed to the modulator 4, while reflected light is directed to the photo-electric transducing means 10 for transduction into an electrical signal whereby the signal at the oscillation frequency is detected. The detected signal is supplied through the amplifier 11 to the phase synchronising detector 20 for synchronous detection using the oscillation signal supplied through the amplifier 22. Whether the phase of the detected signal is in-phase or of opposite phase with respect to the phase of the oscillation signal is thus determined. If the phase of the detected signal is of opposite phase, the characteristic of the electro-optical modulator 2 has changed greatly, so that it is necessary to invert the polarity of the applied voltage of the modulation signal. Therefore, if the phase of the detected signal is of opposite phase, the polarity switching control signal is supplied from the phase synchronising detector 20 to the switch 15 in the control circuit 16. As a result, the polarity of the modulation signal supplied to the electro-optical modulator 2 is inverted, thus permitting stable control of the output light $L_1$ of the electro-optical modulator 2.

When the switch 12 is closed and the laser beam intensity setting value is supplied from the system controller 25 to the D/A converter 23, the value is converted to an analog signal to be supplied through the adder 24 to the control circuit 16 for amplification and for supply to the electro-optical modulator 2.

At this time, the laser beam $L_1$ thus has an intensity corresponding to the setting value.

Part of the laser beam $L_1$ is directed through the beam splitter 3 to the photo-electric transducing means 10 for transduction into an electrical signal. The detected signal is supplied through the amplifier 11 and the switch 12 in the control circuit 16 to the adder 13. The amplifier 11 is set to provide an output of negative polarity. The adder 13 thus provides the difference between the setting value signal supplied from the D/A converter 23 through the adder 24 and the detected signal. The degree of amplification or gain of the amplifier 11 is set such that the level of the detected signal is lower than the level of the setting value signal.

When the intensity of the laser beam $L_1$ is increased by a slight change in the characteristic of the electro-optical modulator 2, the detected signal provided from the photo-electric transducing means 10 is increased in amplitude and invertedly amplified in the amplifier 11 to be supplied to the adder 13. The difference signal detected from the adder 13 thus is reduced. Thus, the modulation signal supplied from the control circuit 16 to the electro-optical modulator 2 is reduced to reduce the intensity of laser beam $L_1$ to the initial intensity.

On the other hand, if the intensity of the laser beam $L_1$ is reduced by a change in the characteristic noted above, the detected signal provided from the photo-electric transducing means 10 is reduced in amplitude, so that the difference signal provided from the adder 13 is increased. The modulation signal supplied from the control circuit 16 to the electro-optical modulator 2 thus is increased, thus increasing the laser beam intensity to the initial intensity. In this way, the intensity of the laser beam $L_1$ is stabilised to the value set in the D/A converter 23 by the system controller 25. It is thus possible to set accurately the laser beam intensity to a value matched to the photosensitive characteristic of a photoresist used in the recording medium 8 or the like.

As has been described, in the above-described embodiment of the present invention a laser beam is modulated according to a reference oscillation signal using the electro-optical modulator 2, a detected signal is obtained from the modulated laser beam using the photo-electric transducing means 10, and the polarity of the modulation signal supplied to the electro-optical modulator 2 is inverted if the phase of the detected signal is opposite to the phase of the reference oscillation signal. Thus, the electro-optical modulator is controllable at all times, so that its handling can be facilitated.

In addition, in the above-described embodiment, a signal of a desired value is supplied from the system controller 25 through the D/A converter 23 to the electro-optical modulator 2, so that it is possible to realise stable and accurate control of the laser beam intensity such as to match it to the photosensitive characteristic of the photoresist or the like.

**Claims**

1. An optical modulation system comprising:
   an electro-optical modulator (2) for modulating a laser beam ($L_o$) according to a modulation signal;
   photo-electric transducing means (10) for transducing a modulated laser beam derived from the electro-optical modulator (2) into an electrical signal; and
   an oscillator (21) for generating an oscillation signal;
   characterized by:
   a phase synchronising detector (20) for detecting whether said electrical signal is in phase with or of opposite phase to said oscillation signal; and
   a control circuit (16) comprising an amplifier (14) for providing two signals having positive and negative polarities, respectively, and a first switch (15), the amplifier (14) being connected to be supplied with said oscillation signal and being operative to supply to said modulator (2) a first modulation signal or a second modulation signal of opposite phase to the first modulation signal, and the first switch (15) being controllable by the phase synchronising detector (20) in such a manner that when said electrical signal is of opposite phase to said oscillation signal the first and second modulation signals are interchanged.

2. A system according to claim 1 wherein the control circuit (16) includes a second switch (12) connected to an output side of the photo-electric transducing means (10) and an adder (13) connected between the second switch (12) and the first switch (15), the arrangement being such that said electrical signal from the photo-electric transducing means (10) is compared with a reference level signal in the adder (13) when the second switch (12) is closed.

**Patentansprüche**

1. Optisches Modulationssystem mit einem elektrooptischen Modulator (2) zum Modulieren eines Laserstrahls ($L_o$) entsprechend einem Modulationssignal,
mit einer fotoelektrischen Wandlereinrichtung (10) zum Umsetzen eines von dem elektrooptischen Modulator (2) abgeleiteten modulierten Laserstrahls in ein elektrisches Signal
und mit einem Oszillator (22) zum Erzeugen eines Schwingungssgignals,
**dadurch gekennzeichnet,**
daß ein Phasensynchronisierdetektor (20) vorgesehen ist, der feststellt, ob das elektrische Signal mit dem Schwingungssignal in Phase ist oder diesem gegenüber mit entgegengesetzter Phase auftritt,
und daß eine Steuerschaltung (16) mit einem Verstärker (14) für die Lieferung zweier Signale mit positiver bzw. negativer Polarität und mit einem ersten Schalter (15) vorgesehen ist,
wobei der Verstärker (14) so geschaltet ist, daß ihm das betreffende Schwingungssignal zugeführt ist, und so betrieben ist, daß dem Modulator (2) ein erstes Modulationssignal oder ein zweites Modulationssignal mit entgegengesetzter Phase bezogen auf das erste Modulationssignal zugeführt wird,
und wobei der erste Schalter (15) durch den Phasensynchronisierdetektor (20) derart steuerbar ist, daß dann, wenn das elektrische Signal mit entgegengesetzter Phase in bezug auf das Schwingungssignal auftritt, die ersten und zweiten Modulationssignale vertauscht sind.

2. System nach Anspruch 1, wobei die Steuerschaltung (16) einen zweiten Schalter (12), der mit einer Ausgangsseite der fotoelektrischen Wandlereinrichtung (10) verbunden ist, und einen Addierer (13) aufweist, der zwischen dem zweiten Schalter (12) und dem ersten Schalter (15) angeschlossen ist,

wobei die Anordnung so getroffen ist, daß das elektrische Signal von der fotoelektrischen Wandlereinrichtung (10) in dem Addierer (13) mit einem Referenzpegelsignal verglichen wird, wenn der zweite Schalter (12) geschlossen ist.

**Revendications**

1. Système de modulation optique comprenant :
un modulateur électro- optique (2) pour moduler un faisceau laser (LO) en fonction d'un signal de modulation ;
des moyens transducteurs photo- électriques (10) pour traduire un faisceau laser modulé provenant du modulateur électro- optique (2) en un signal électrique ; et
un oscillateur (21) pour engendrer un signal d'oscillation ;
caractérisé par :
un détecteur de synchronisation de phase (20) pour détecter si le signal électrique est en phase ou en opposition de phase avec ledit signal d'oscillation ; et
un circuit de commande (16) comprenant un amplificateur (14) pour produire deux signaux présentant des polarités positive et négative, respectivement, et un premier commutateur (15), l'amplificateur (14) étant connecté de façon à être alimenté par ledit signal d'oscillation et étant destiné à alimenter ledit modulateur (2) par un premier signal de modulation ou par un second signal de modulation de phase opposée au premier signal de modulation, et le premier commutateur (15) pouvant être commandé par le détecteur de synchronisation de phase (20) d'une manière telle que si ledit signal électrique est de phase opposée au dit signal d'oscillation, on échange les premier et second signaux de modulation.

2. Système selon la revendication 1 dans lequel le circuit de commande (16) comporte un second commutateur (12), connecté du côté de sortie des moyens transducteurs photo- électriques (10), et un additionneur (13) est connecté entre le second commutateur (12) et le premier commutateur (15), le montage étant tel que ledit signal électrique provenant des moyens transducteurs photo-électriques (10) est comparé à un signal de niveau de référence sur l'additionneur (13) quand le second commutateur (12) est fermé.

FIG. 1

EP 0 185 557 B1

F I G . 2

EP 0 185 557 B1